Europäisches Patentamt

European Patent Office

Office européen des brevets

(11) Publication number : **0 478 365 A1**

# (12) EUROPEAN PATENT APPLICATION

(21) Application number : **91308853.0**

(22) Date of filing : **27.09.91**

(51) Int. Cl.⁵ : **B01J 37/20, C10G 45/08**

(30) Priority : **28.09.90 JP 256852/90**

(43) Date of publication of application :
**01.04.92 Bulletin 92/14**

(84) Designated Contracting States :
**BE DE FR GB NL**

(71) Applicant : **SUMITOMO METAL MINING COMPANY LIMITED**
**11-3, Shinbashi 5-chome Minato-ku**
**Tokyo 105 (JP)**

(72) Inventor : **Kanai, Yuuki**
**3-18-35, Nakakokubun**
**Ichikawa City, Chiba Prefecture (JP)**

(74) Representative : **Hartley, David**
**Withers & Rogers 4 Dyer's Buildings Holborn**
**London, EC1N 2JT (GB)**

(54) **Presulphurized catalyst for hydrogen treatment and method for production thereof.**

(57)    A presulphurized type catalyst for the hydrogen treatment comprises a porous substance of at least one member selected from the group consisting of alumina, silica, titania, zirconia and activated carbon as a carrier, a Group 6 metal and a Group 8 metal in the Periodic Table of Elements as active metals, and β -thiodiglycol as a sulphurizing agent.

This catalyst is produced by either adding β -thiodiglycol to a catalyst having a Group 6 metal and a Group 8 catalyst in the Periodic Table of Elements deposited on a catalyst carrier or adding a Group 6 metal and a Group 8 metal in the Periodic Table of Elements and β -thiodiglycol to a catalyst carrier and drying the resultant composite at a temperature not exceeding 200°C.

EP 0 478 365 A1

This invention relates to a method for the production of a catalyst for the hydrogen treatment of a hydrocarbon oil.

A catalyst having a Group 6 metal and a Group 8 metal in the Periodic Table of Elements deposited as active metals on a porous carrier of alumina, titanium, silica, or activated carbon has been commonly used for catalyzing the hydrogen treatment for effecting hydrogenation, desulphurization, denitrification, and decomposition of a hydrocarbon oil. Generally, Mo and W have been used as the Group 6 metal and Ni and Co as the Group 8 metal. These active metals are deposited in the form of oxides on the carrier and show low activity. For the catalyst to be used effectively for catalyst, therefore, it must be properly treated for preliminary sulphurization to effect conversion of the active metals to the sulphide form. For this preliminary sulphurization, an on-site sulphurization method is generally adopted which comprises forming, in an apparatus for the hydrogen treatment, a catalyst bed by packing the apparatus with the catalyst in the oxide form and causing the hydrocarbon oil having a sulphurizing agent dissolved therein and heated to an elevated temperature in the presence of hydrogen to be passed through the catalyst bed thereby elevating the temperature of the catalyst and inducing the reaction of sulphurization of the hydrocarbon oil.

In this on-site sulphurization method, however, the operation of mixing the hydrocarbon oil with the sulphurizating agent and hydrogen and, at the same time, heating the mixed oil to the elevated temperature and passing the hot mixed oil through the catalyst bed is complicated. Moreover, this method requires the hydrocarbon oil used for the treatment to contain no olefin capable of forming poison and also to possess low viscosity. A shortage of the sulphurizating agent entails the disadvantage that the active metals are reduced by the coexisting hydrogen and consequently passivated and prevented from producing sufficient activity. The method must be operated advertently in every respect. Thus, various methods are being studied with a view to omitting or at least simplifying the preliminary sulphurization treatment.

As one of such methods, the so-called off-site method has been proposed which comprises adding a sulphurizing agent to an oxide type catalyst for the hydrogen treatment thereby converting the active metals of the catalyst to sulphides or precursors of sulphides, packing an apparatus for the hydrogen treatment with the presulphurized catalyst thereby forming therein a catalyst bed, and causing the hydrocarbon oil to be heated to an elevated temperature and, at the same time, passed through the catalyst bed thereby elevating the temperature of the catalyst bed to a prescribed level. The catalyst for the hydrogen treatment which is used in the off-site method is characterised by the fact that a sulphur component is deposited in a required method in a catalyst matrix. Thus, the treatment of preliminary sulphurization which is required for the on-site method is not required for the off-site method.

Incidentally, as sulphurizing agents which can be used for the off-site method, U.S Patent No. 4,636,487 discloses mercapto alcohols, U.S Patent No. 4,725,571 discloses dialkyl polysulphides [general formula: R-S(n(-R'), and Japanese Patent Application Disclosure (Kokai) HEI 2(1990)-90,948 discloses dithiocarbamic acid, dimercapto-thiadiazole, thiourea, ammonium thiocyanate dimethyl sulfoxide, dithiodiethanol.

In recent years, increasingly severe restrictions have come to be imposed on air pollution with waste gas and the desirability of further lowering the sulphur content of fuel oils has found enthusiastic acceptance. As a result, the need of a catalyst which not only realises omission or simplification of the aforementioned treatment for preliminary sulphurization but also enjoys a higher activity than the conventional counterparts has come to be recognised. The catalyst for the aforementioned off-site method is not fully satisfactory, though it obviates the necessity for the sulphurization preliminary treatment. This is because the activity of the catalyst is not appreciably different from that of the conventional counter-parts and the sulphurizing agent to be used therein is invariably expensive to the extent of inevitably boosting the cost of the catalyst.

The present applicant has, as an answer to fulfil the need mentioned above, already disclosed a presulphurized type catalyst using a mercapto-carboxylic acid for the hydrogen treatment and a method for the production of this catalyst. The mercapto-carboxylic acid to be used in this presulphurized type catalyst for the hydrogen treatment, however, encounters as a problem the generation of a corrosive carboxylic acid in consequence of the decomposition of the mercapto-carbosylic acid due to elevation of temperature and the consequent activation of active metals. This carboxylic acid constitutes a serious hindrance to the practical use of the catalyst because it corrodes and deteriorates the material of the apparatus.

An object of this invention is to provide a presulphurized catalyst for the hydrogen treatment possessing activity favourably comparable with the activity of the aforementioned presulphurized type catalyst using a mercapto-carboxylic acid and yet avoiding generation of any corrosive substance during the elevation of temperature for activation.

The object of this invention described above is accomplished by a presulphurized catalyst for hydrogen treatment, comprising a porous substance of alumina, silica, titania, zirconia, or activated carbon as a carrier, a Group 6 metal and a Group 8 metal in the Periodic Table of Elements as active metals, and $\beta$ - thiodiglycol and optionally phosphorus as a sulphurizing agent. The object is further accomplished by a method for the production of a presulphurized catalyst for hydrogen treatment, which method comprises either adding β -thiodiglycol to a catalyst having a Group 6 metal and a Group 8 metal in the Periodic Table of Elements deposited as active metals on a catalyst carrier or adding the Group 6 metal and the Group 8 metal in the Periodic Table of Elements and β -thiodiglycol to the catalyst carrier and then drying the resultant composite at a temperature of not higher than 200°C, preferably on the condition that the β -thiodiglycol is added in an amount in the range of from 0.7 to 2.5 times the amount necessary for converting the active metals to the sulphide form.

The catalyst which is usable in the present invention is the conventional commercially available catalyst in the oxide form. As the carrier therefore, a porous substance of alumina, silica, titania, zirconia, or activated carbon is used. On this carrier, Mo and/or W as a Group 6 metal is deposited in the form of an oxide in a proportion in the range of from 5 to 30% by weight and Co and/or Ni as a Group 8 metal is deposited in an amount to account for a proportion in the range of from 1 to 8% by weight (hereinafter referred to simply as "%"), and optionally P is additionally deposited as an oxide in an amount to account for a proportion in the range of from 0.1 to 8%.

The mechanism which enables the use of β -thiodiglycol to enhance the activity of the catalyst of the present invention remains yet to be elucidated. The fact that in the presulphurized catalyst of this invention for the hydrogen treatment, the active metals are deposited in a highly dispersed state even after their activation has been demonstrated by X-ray diffraction, experiment of chemical adsorption, and observation of TEM. A fair inference from this fact is that there has been a notable increase in the number of hydrogenation activity sites.

The decomposition of β -thiodiglycol which occurs during the activation of the catalyst manufactured by the method of this invention produces lower hydrocarbons such as ethane and methane and ethanol as well and does not give rise to any corrosive substance such as carboxylic acid at all.

When the catalyst incorporating therein β -thiodiglycol is dried at a temperature exceeding 200°C, the β -thiodiglycol is decomposed. The drying temperature, therefore, must be below 200°C. The amount of β -thiodiglycol to be added must be in the range of from 0.7 to 2.5 times the amount enough for the active metals as Mo, W, Ni, and Co to be converted to such sulphides as $MoS_2$, $WS_2$, NiS, and CoS which possess activity. Even the lower limit, i.e 0.7 times the stated amount, is sufficient because the sulphur component contained in the hydrocarbon oil subjected to the activation lends itself partly to the sulphurization of the active metals. If β -thiodiglycol is added in an unduly large amount, the hydrocarbon oil gives birth to a carbonaceous substance during the activation and carbonaceous substance persists in the catalyst and eventually clogs the pores in the catalyst, and, consequently, not only prevents the catalyst from manifesting its activity fully but also curtails the service life of the catalyst. Thus, the amount of β -thiodiglycol to be added must be below 2.5 times the stated amount.

Now, the present invention will be described more specifically below with reference to working examples.

**Example 1:**

One hundred (100) g of a γ-alumina carrier having a specific surface area of 280 m²/g and a pore volume of 0.75 ml/g was impregnated with 80 ml of an aqueous active metal solution prepared from 19.3 g of molybdenum trioxide, 8.2 g of cobalt carbonate, 6.15 g of 85% phosphoric acid, and water. The resultant impregnated carrier was dried at 110°C for five hours. Then, the dried carrier was impregnated with 100 ml of an aqueous solution containing 62 g of β -thiodiglycol and subsequently dried at 110°C for 10 hours, to obtain a catalyst A.

This catalyst A contains 15% of $MoO_3$, 4% of CoO, and 3% of $P_2O_5$. The amount of β -thiodiglycol incorporated in this catalyst A was 1.5 times the amount required for converting Mo to $MoS_2$ and Co to CoS.

This catalyst A was used in the test for hydroesulphurization of light gas oil of Kuwaiti origin exhibiting the following properties under the following conditions.

(Properties of light gas oil of Kuwaiti origin)

| | |
|---|---|
| Specific gravity (15/4°C) | 0.844 |
| Sulphur (%) | 1.55 |
| Behaviour during distillation (initial boiling point, °C) | 231 |
| (50 vol%, °C) | 313 |
| (end point, °C) | 390 |

(Testing conditions)

| | |
|---|---|
| Amount of catalyst (ml) | 15 |
| Spatial speed velocity of oil as raw material (Hr) | 2 |
| Pressure of reacting hydrogen ($Kg/cm^2G$) | 30 |
| Reaction temperature (°C) | 330 |
| Flow volume ratio of hydrogen/oil (Nl/l) | 300 |
| Oil passage time (hr) | 88 |

The activity of hydrodesulphurization was determined as relative value of the reaction velocity constant and the velocity constant was determined on the assumption that the reaction velocity of desulphurization is proportional to the 1,75th power of the sulphur concentration of oil after desulphurization. As the standard, Ketjenfine KF-742 was used. This catalyst contains 4% of CoO and 15% of $MoO_3$. The relative activity of other catalysts was determined regarding the reaction velocity constant of Ketjenfine KF-742 as 100.

The catalyst A showed activity of 248, a magnitude prominently higher than that of Ketjenfine KF-742.

**Example 2:**

The same carrier impregnated with active metals and dried in the same manner as in Example 1 was fired at 500°C for three hours. The fired carrier was impregnated with 120 ml of an agueous solution containing 56 g of β -thiodiglycol and then dried at 110°C for 10 hours, to obtain a catalyst B.

This catalyst B contained 15% of $MoO_3$, 4% of CoO, and 3% of $P_2O_5$. The amount of β -thiodiglycol incorporated in this catalyst B was 1.35 times the amount required for converting Mo to $MoS_2$ and Co to CoS.

This catalyst B was used in the test for effecting hydrogenation and desulphurization of light gas oil of Kuwaiti origin in the same manner as in Example 1. The activity of the catalyst B was 175, a magnitude higher than that of Ketjenfine KF-742.

**Example 3:**

One hundred (100) g of a γ-alumina carrier having a specific surface area of 280 $m^2/g$ and a pore volume of 0,75 ml/g was impregnated with 80 ml of an aqueous active metal solution prepared from 19.3 g of molybdenum trioxide, 8.2 g of cobalt carbonate, 6.15 g of 85% phosphoric acid, 56 g of $\beta$ -thiodiglycol, and water. The impregnated carrier was dried at 110°C for five hours, to obtain a catalyst C.

This catalyst C contained 15% of $MoO_3$, 4% of CoO, and 3% of $P_2O_5$. The amount of $\beta$ -thiodiglycol incorporated in this catalyst C was 1.35 times the amount required for converting Mo to $MoS_2$ and Co to CoS.

This catalyst C was used in the test for effecting hydroesulphurization of light gas oil of Kuwaiti origin in the same manner as in Example 1. The activity of this catalyst C was 202, a magnitude higher than that of Ketjenfine KF-742.

## Example 4:

One hundred (100) g of an alumina-silica carrier having $SiO_2$ content of 10%, a specific surface area of 325 m²/g, and a pore volume of 0.69 ml/g was impregnated with 80 ml of an aqueous active metal solution prepared from 19,3 g of molybdenum trioxide, 8,2 g of cobalt carbonate, 6.15 g of 85% phosphoric acid, and water. The impregnated carrier was dried at 110°C for five hours. The dried carrier was then impregnated with 100 ml of an aqueous solution containing 62 g of $\beta$ -thiodiglycol and dried at 110°C for 10 hours, to obtain a catalyst D.

This catalyst D contained 15% of $MoO_3$, 4% of CoO, and 3% of $P_2O_5$. The amount of $\beta$ -thiodiglycol incorporated in this catalyst D was 1.5 times the required for converting Mo to $MoS_2$ and Co to CoS.

This catalyst D was used in the test for effecting hydrodesulphurization of light gas oil of Kuwaiti origin in the same manner as in Example 1. The activity of this catalyst D was 240, a magnitude prominently higher than that of Ketjenfine KF-742.

## Example 5:

One hundred (100) g of a titania carrier having a specific surface area of 220 m²/g and a pore volume of 0.45 ml/g was impregnated with 80 ml of an aqueous active metal solution prepared from 19.3 g of molybdenum trioxide, 8.2 g of nickel carbonate, 6.15 g of 85% phosphoric acid, and water. The impregnated carrier was dried at 110°C for five hours. Then, the dried carrier was impregnated with 80 ml of an aqueous solution containing 54 g of $\beta$ -thiodiglycol and dried at 110°C for 10 hours, to obtain a catalyst E.

This catalyst E contained 15% of $MoO_3$, 4% of NiO, and 3% of $P_2O_5$. The amount of $\beta$ -thiodiglycol incorporated in the catalyst E was 1.3 times the amount required for converting Mo to $MoS_2$ and Ni to NiS.

This catalyst E was used in the test for effecting hydrodesulphurization of light gas oil of Kuwaiti origin in the same manner as in Example 1. The activity of the catalyst E was 161, a magnitude higher than that of Ketjenfine KF-742.

## Comparative Experiment 1:

A catalyst F was obtained by repeating the procedure of Example 1, except thioglycolic acid was used in the place of $\beta$ -thiodiglycol.

The catalyst F contained 15% of $MoO_3$, 4% of CoO, and 35% of $P_2O_5$. The amount of thioglycolic acid incorporated in the catalyst F was 1.5 times the amount required for converting Mo to $MoS_2$ and Co to CoS.

This catalyst F was used in the test for effecting hydrodesulphurization of light gas oil of Kuwaiti origin in the same manner as in Example 1. The activity of this catalyst F was 224 a magnitude higher than that of Ketjenfine KF-742.

From the results given above it is clearly noted that the method of the present invention imparts to the produced presulphurized catalyst for the hydrogen treatment the activity favourably comparable with the activity of the presulphurized type catalyst using thioglycolic acid as a sulphurizing agent for the hydrogen treatment. By the tests described above, the catalyst manufactured by the method of this invention, during decomposition due to elevation of temperature, produced hydrocarbons such as methane and ethyl mercaptane as well and did not give rise to carboxylic acids at all.

The catalyst manufactured by the method of the present invention possess the same degrees of activity as the counterpart catalysts using mercapto-carboxylic acids and yet avoid emitting any corrosive gas during the elevation of temperature. It may be safely concluded, therefore, that the catalysts manufactured by the method of this invention are truly practicable.

**Claims**

1.  A presulphurized type catalyst for hydrogen treatment, comprising a porous substance of at least one of alumina, silica, titania, zirconia, and activated carbon as a carrier, a Group 6 metal and a Group 8 metal in the Periodic Table of Elements as active metals, and β -thiodiglycol as a sulphurizing agent.

2.  A catalyst according to claim 1, which further comprises phosphorus.

3.  A catalyst according to claim 2, wherein phosphorus is contained as an oxide in an amount of from 0.1 to 8% by weight.

4.  A catalyst according to claims 1, 2 or 3, wherein Mo and/or W is the Group 6 metal in an amount of from 5 to 30% by weight as oxide.

5.  A catalyst according to claims 1, 2, 3 or 4, wherein Co and/or Ni is the Group 8 metal in an amount of from 1 to 8% by weight as oxide.

6.  A method for the production of a presulphurized type catalyst for the hydrogen treatment, which method comprises adding β -thiodiglycol to a catalyst having a Group 6 metal and a Group 8 catalyst in the Periodic Table of Elements deposited on a catalyst carrier and drying the resultant composite at a temperature not exceeding 200°C.

7.  A method according to claim 6, wherein the β -thiodiglycol is added in an amount 0.7 to 2.5 times the amount required for converting the active metals to sulphides.

8.  A method for the production of a presulphurized type catalyst for the hydrogen treatment, which method comprises step of having a Group 6 metal and a Group 8 metal in the Periodic Table of Elements and β -thiodiglycol to a catalyst carrier and drying the resultant composite at a temperature not exceeding 200°C.

9.  A method according to claim 8, wherein said β -thiodiglycol is added in an amount 0,7 to 2.5 times the amount required for converting the active metals to sulphides.

**European Patent Office**

# EUROPEAN SEARCH REPORT

Application Number

EP 91 30 8853

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | EP-A-0 409 680 (EURECAT EURPEENNE DE RETRAITEMENT DE CATALYSEURS)<br>* column 7, line 52; claims 1-17 *<br>* column 3, line 1 - line 24 *<br>--- | 1-9 | B01J37/20<br>C10G45/08 |
| P,X | US-A-5 017 535 (AKZO)<br>* column 3, line 5 - line 9; claims 1-5; example 1 *<br>* column 2, line 44 - line 68 *<br>--- | 1-9 | |
| P,X | WO-A-9 012 647 (EURECAT EURPEENNE DE RETRAITEMENT DE CATALYSEURS)<br>* page 8, line 10; claims 1-3 *<br>* page 2, line 16 - line 21 *<br>--- | 1-9 | |
| A | EP-A-0 357 295 (SUMIMOTO METAL MINING COMPANY)<br>* claims 1-49 *<br>--- | 1-9 | |
| D,A | EP-A-0 352 851 (AKZO)<br>--- | | |
| D,A | US-A-4 636 487 (PHILLIPS PETROLEUM)<br>--- | | TECHNICAL FIELDS SEARCHED (Int. Cl.5 ) |
| D,A | US-A-4 725 571 (TUSZYNSKI)<br>----- | | B01J |

The present search report has been drawn up for all claims

| Place of search | Date of completion of the search | Examiner |
|---|---|---|
| THE HAGUE | 22 JANUARY 1992 | MICHIELS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)